# EUROPÄISCHE PATENTSCHRIFT

(11) **EP 3 415 270 B1**
(45) Veröffentlichungstag und Bekanntmachung des Hinweises auf die Patenterteilung: **17.11.2021**
(21) Anmeldenummer: 18176784.9
(22) Anmeldetag: 08.06.2018
(51) Int. Cl.: B23Q 11/08, A61C 13/00, B23Q 39/02, B23Q 11/10

(54) **BEARBEITUNGSMASCHINE FÜR DIE HERSTELLUNG VON ZAHNTECHNISCHEN WERKSTÜCKEN**
PROCESSING MACHINE FOR THE PRODUCTION OF DENTAL WORKPIECES
MACHINE D'USINAGE DESTINÉE À LA FABRICATION DE PIÈCES D'ORTHONDONTIE

(30) Priorität: 13.06.2017 AT 504942017
(43) Veröffentlichungstag der Anmeldung: 19.12.2018
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- EP-A1- 2 628 566
- CH-A2- 701 445
- DE-A1- 19 929 695
- DE-A1-102006 023 673
- DE-U1-202011 103 226
- US-A- 5 607 269
- US-A1- 2006 133 903
- US-A1- 2011 085 863

## Beschreibung

Die Erfindung betrifft eine Bearbeitungsmaschine für die Herstellung von zahntechnischen Werkstücken aus einem Rohling, mit einem Gehäuse, in welchem eine erste Kammer und eine von der ersten Kammer getrennte zweite Kammer ausgebildet sind, einer in der ersten Kammer angeordneten und relativ zum Gehäuse bewegbaren ersten Haltevorrichtung für einen Rohling, einer in der zweiten Kammer angeordneten und relativ zum Gehäuse bewegbaren zweiten Haltevorrichtung für einen Rohling und einer relativ zum Gehäuse bewegbaren Bearbeitungsvorrichtung. Zudem betrifft die Erfindung die Verwendung einer solchen Bearbeitungsmaschine zum Herstellen von zahntechnischen Werkstücken aus einem Rohling.

Bei der Herstellung von zahntechnischen Werkstücken werden seit vielen Jahren Bearbeitungsmaschinen eingesetzt, welche auf Basis von entsprechenden Datensätzen aus einem Rohling ein zahntechnisches Werkstück herausarbeiten. Meist werden dafür CNC-Bearbeitungsmaschinen (Computerized Numerical Control), insbesondere CAD/CAM-Bearbeitungsmaschinen, eingesetzt. Als Rohlinge können zylinderförmige Scheiben, Vielecke, vorgefräste Rohlinge oder alle in der Dentalbrache zu bearbeitbaren Objekte verstanden werden.

Je nach herzustellendem Werkstück kann es notwendig sein, dass der Rohling trocken oder nass bearbeitet wird. Um hier nicht zu oft aufwändige Reinigungsarbeiten durchführen zu müssen, ist es aus der DE 10 2006 023 673 B4 bekannt, dass in der Fräsvorrichtung (entspricht der Bearbeitungsmaschine) zwei durch mindestens eine Trennwand getrennte Kammern für verschieden Fräsarten (Trockenfräsen bzw. Nassfräsen) vorgesehen sind. Gemäß dieser Schrift ist in jeder dieser beiden Kammern jeweils ein Fräskopf (entspricht der Bearbeitungsvorrichtung) zur Herstellung von Zahnersatzteilen angeordnet. Da derartige Fräsköpfe relativ komplexe Geräte sind und auch separat angetrieben werden, sind sie relativ teuer. Weiters betrifft die Erfindung eine Bearbeitungsmaschine, bei welcher mit der Bearbeitungsvorrichtung ein in der ersten Haltevorrichtung gehaltener Rohling und ein in der zweiten Haltevorrichtung gehaltener Rohling bearbeitbar ist. Ein Beispiel dafür geht aus der DE 199 29 695 A1 hervor.

Die DE 20 2011 103226 U1 offenbart eine Bearbeitungsmaschine gemäß dem Oberbegriff des Anspruchs 1.

Die Aufgabe der vorliegenden Erfindung besteht darin, die angeführten Nachteile zu beheben. Insbesondere soll die Bearbeitungsmaschine günstiger und kompakt sein und eine Vereinfachung gegenüber dem Stand der Technik bringen. Dennoch soll eine getrennte Bearbeitung möglich sein.

Dies wird durch eine Bearbeitungsmaschine mit den Merkmalen von Anspruch 1 gelöst. Demnach ist erfindungsgemäß vorgesehen, dass eine der Begrenzungswände eine erste Zugangsöffnung zur ersten Kammer und eine zweite Zugangsöffnung zur zweiten Kammer aufweist, wobei die Bearbeitungsvorrichtung, vorzugsweise deren Antriebsvorrichtung, an der (Außenseite der) Begrenzungswand, vorzugsweise linear, bewegbar gelagert ist.

Generell müssen nicht zwei separate und aufwändige Bearbeitungsvorrichtungen vorgesehen sein, sondern es kann in beiden Kammern kostengünstig durch dieselbe Bearbeitungsvorrichtung eine Bearbeitung eines Rohlings durchgeführt werden. Die Bearbeitungsvorrichtung ist also abwechselnd in die erste und in die zweite Kammer bewegbar. Mithin kann die Bearbeitungsvorrichtung einen Pendelbetrieb durchführen.

Es soll nicht ausgeschlossen werden, dass zum Beispiel für zusätzliche Bearbeitungsaufgaben eine zweite (Hilfs-)Bearbeitungsvorrichtung vorgesehen ist. Selbst wenn dies der Fall ist, dann ist immer noch die (Haupt-) Bearbeitungsvorrichtung in beide Kammern bewegbar. Besonders bevorzugt ist allerdings vorgesehen, dass die Bearbeitungsmaschine nur eine Bearbeitungsvorrichtung aufweist.

Als Bearbeitungsvorrichtung können an sich bekannte Geräte eingesetzt werden, mit welchen ein Rohling spanabhebend bzw. materialabtragend bearbeitbar ist. Dies stellt eine bevorzugte Ausführungsvariante der Erfindung dar. Es soll jedoch nicht ausgeschlossen werden, dass an Stelle der (oder zusätzlich zur) materialabtragenden Bearbeitungsvorrichtung, eine materialauftragende Vorrichtung vorgesehen wird, welche im Wesentlichen nach dem Prinzip der additiven Fertigungsverfahren arbeiten.

Gemäß einem bevorzugten Ausführungsbeispiel ist vorgesehen, dass die Bearbeitungsvorrichtung eine Antriebsvorrichtung, eine von der Antriebsvorrichtung drehbar angetriebene Bearbeitungsspindel und ein in die Bearbeitungsspindel eingespanntes Bearbeitungswerkzeug aufweist. Als Bearbeitungswerkzeug kann beispielsweise ein Fräser, ein Bohrer, ein Schleifer, Objekte zur Identifizierung und/oder Abtastung oder ähnliches eingesetzt werden. Generell kann auch ein Werkzeugmagazin für die Bestückung der Bearbeitungsvorrichtung mit verschiedenen Bearbeitungswerkzeugen vorgesehen sein. Hier können auch getrennte Magazine für unterschiedliche Arten von Werkzeugen vorgesehen werden. Unterschiedliche Arten sind beispielsweise Werkzeuge für die Trocken- und Werkzeuge für die Nassbearbeitung. Im Speziellen können automatisiert je nach Bedarf verschiedene Bearbeitungswerkzeuge in die Bearbeitungsspindel eingesetzt werden.

Es soll nicht ausgeschlossen sein, dass die beiden Kammern in zwei voneinander komplett getrennten (und sogar relativ zueinander bewegbaren) Teilgehäusen des Gehäuses der Bearbeitungsmaschine ausgebildet sind. Bevorzugt ist allerdings vorgesehen, dass das Gehäuse eine Trennwand aufweist, wobei durch die Trennwand die beiden Kammern voneinander getrennt sind. Das Gehäuse dient der Abtrennung des Maschineninneren zur Umgebung. Das Gehäuse kann auch das Maschinenbett umfassen, welches in diesem Fall als tragende Struktur fungiert.

Die beiden Kammern können komplett identisch aufgebaut sein. Um aber die Bearbeitungsmaschine für unterschiedliche Anwendungsmöglichkeiten auszulegen, ist bevorzugt vorgesehen, dass die erste Kammer einen Bearbeitungsbereich zur Trockenbearbeitung des in der ersten Haltevorrichtung gehaltenen Rohlings bildet und dass die zweite Kammer einen Bearbeitungsbereich zur Nassbearbeitung des in der zweiten Haltevorrichtung gehaltenen Rohlings bildet.

Bevorzugt kann vorgesehen sein, dass vor allem die Kammer mit dem Bearbeitungsbereich zur Nassbearbeitung zumindest eine (zusätzliche) Einbringvorrichtung, vorzugsweise zumindest eine Düse, zum Einbringen einer Flüssigkeit, vorzugsweise Wasser oder ein Kühlschmiermittel, in den Bearbeitungsbereich aufweist. Beispielsweise kann in der zweiten Haltevorrichtung (Werkstückaufnahme) Metall unter Wasserkühlung bearbeitet werden. Nachdem diese Bearbeitung abgeschlossen ist, fährt die Bearbeitungsspindel in die erste Kammer mit der ersten Haltevorrichtung. Hier kann dann die Bearbeitung von beispielsweise Zirkon stattfinden. Zahntechniker können somit Werkstoffe bearbeiten, welche trocken wie auch nass bearbeitet werden müssen. Würde man nämlich in einer ersten Bearbeitung einen Rohling nass bearbeiten und anschließend einen Rohling trocken, wie beispielsweise ein Rohling aus Zirkon, bekommt man das Problem, dass das poröse Zirkonmaterial die Feuchtigkeit aufnimmt und somit dann schlechte Ergebnisse im Zahnersatz erzielt werden. Um diese Probleme zu beseitigen wird eine erfindungsgemäße dentale Bearbeitungsmaschine verwendet, welche einen Pendelbetrieb ermöglicht. So werden generell zwei Bearbeitungsbereiche vorgesehen, welche voneinander in einer Art und Weise abgetrennt sind, dass die Rohlinge durch die Bearbeitung des anderen Rohlings nicht negativ beeinflusst werden. Demnach steht dem Zahntechniker eine Bearbeitungsmaschine zur Verfügung, welche zwei Rohlinge hintereinander - ohne Eingreifen des Zahntechnikers - bearbeiten kann. Somit wird auch eine Steigerung der Flexibilität erreicht.

Die beiden Kammern sind jeweils so aufgebaut, dass sie von Begrenzungswänden des Gehäuses allseitig umschlossen sind. Bevorzugt sind als Begrenzungswände vier (im Wesentlichen rechtwinkelig zueinander ausgerichtete) Seitenwände, ein Bodenelement und ein Deckenelement vorgesehen. Eine der Seitenwände kann gleichzeitig die Trennwand zur jeweils anderen Kammer bilden.

Prinzipiell ist es möglich, dass die gesamte Bearbeitungsvorrichtung durch die jeweiligen Zugangsöffnungen in die beiden Kammern ein- und ausgefahren werden kann. Bevorzugt ist allerdings vorgesehen, dass die Bearbeitungsvorrichtung, vorzugsweise nur ein Teil der Bearbeitungsspindel samt Bearbeitungswerkzeug, zumindest teilweise durch die erste Zugangsöffnung hindurch in die erste Kammer einfahrbar ist oder zumindest teilweise durch die zweite Zugangsöffnung hindurch in die zweite Kammer einfahrbar ist.

Um Verschmutzungen außerhalb der Kammern zu vermeiden, ist bevorzugt vorgesehen, dass die Zugangsöffnungen jeweils durch Verschlussmechanismen, vorzugsweise durch jeweils zumindest eine an einem Rahmen bewegbar gelagerte Verschlusstüre, verschließbar sind. Als Verschlussmechanismus kann aber auch ein nachgiebiges Element, zum Beispiel eine Gummimatte, mit einem Einfahrschlitz für die Bearbeitungsspindel dienen oder es können beispielsweise Bürsten verwendet werden.

Es ist möglich, dass die Bearbeitungsvorrichtung nur entlang einer linearen Bewegungsachse in die Kammern ein- und ausfahrbar ist und dass die für die Bearbeitung notwendigen Bewegungen in die restlichen beiden Raumachsen durch die Haltevorrichtungen für die Rohlinge durchgeführt werden. Bevorzugt ist allerdings vorgesehen, dass sich die Bearbeitungsvorrichtung in den Kammern in zumindest zwei Raumachsen bewegen kann. Um dies zu ermöglichen und gleichzeitig Verschmutzungen außerhalb der Kammer zu vermeiden, ist gemäß einem Ausführungsbeispiel der vorliegenden Erfindung vorgesehen, dass die Begrenzungswand zumindest teilweise als nachgiebiges und bewegbares Wandelement, vorzugsweise als Faltenbalg oder als Sackelement, ausgebildet ist. Im Speziellen sind dann die Verschlussmechanismen, vorzugsweise die Rahmen der Verschlusstüren, im nachgiebigen und bewegbaren Wandelement befestigt. Dadurch wird erreicht, dass die Verschlussmechanismen über die Bearbeitungsvorrichtung relativ zu den Kammern bewegbar sind, wodurch sich auch das Bearbeitungswerkzeug in zwei, vorzugsweise in allen drei, Raumachsen in der jeweiligen Kammer bewegen kann. Dies stellt wiederum nur eine bevorzugte Ausgestaltung dar und die Bewegungsachsen können auch in einer anderen Konfiguration/Ausrichtung zueinander ausgestaltet sein.

Die Haltevorrichtung kann prinzipiell sehr einfach aufgebaut sein, vor allem je mehr der für die Bearbeitung notwendigen Bewegungen von der Bearbeitungsvorrichtung durchgeführt werden. Allgemein kann als Haltevorrichtung ein Element verwendet werden, welches die Aufgabe des sicheren Haltens des Rohlings erfüllt. Bevorzugt ist vorgesehen, dass die erste und die zweite Haltevorrichtung jeweils einen am Gehäuse drehbar gelagerten und drehbar angetriebenen Außenring und einen am Außenring drehbar gelagerten und drehbar angetriebenen Innenring aufweisen. In diesen Innenring ist dann jeweils der, vorzugsweise scheibenförmige, Rohling über entsprechende Spannelemente gehalten. Unter "Ring" (für Außenring und Innenring) ist auch ein Teilring zu verstehen, welcher nicht komplett umfänglich geschlossen ist. Der Ring muss auch nicht (teil)kreisförmig ausgebildet sein. Bevorzugt ist der Ring (Außenring und Innenring) jeweils in Form eines geschlossen Rings ausgebildet. Bevorzugt sind zumindest die Innenkonturen des Außenrings und des Innenrings im Querschnitt (zumindest bereichsweise) kreisförmig. Im Fall dass kein Innenring verwendet wird, wird der Rohling direkt am Außenring oder an einer sonstigen Befestigungsvorrichtung montiert.

Um möglichst wenige Antriebsvorrichtungen in die Bearbeitungsmaschine einbauen zu müssen, ist bevorzugt vorgesehen, dass beide Haltevorrichtungen, vorzugsweise deren Außenringe, von einer Antriebsvorrichtung synchron antreibbar und um eine gemeinsame Drehachse drehbar sind. Weiters ist bevorzugt vorgesehen, dass die Innenringe der beiden Haltevorrichtungen jeweils durch eine Antriebsvorrichtung um jeweils eine Drehachse drehbar antreibbar sind.

Gemäß einem weiteren bevorzugten Ausführungsbeispiel der vorliegenden Erfindung ist eine Steuer- oder Regeleinheit zum Steuern oder Regeln der Bearbeitungsmaschine vorgesehen. Diese Steuer- oder Regeleinheit ist bevorzugt Teil einer Bedienvorrichtung, welche eine Anzeigevorrichtung, vorzugsweise einen Bildschirm, und eine Eingabevorrichtung, vorzugsweise eine Tastatur samt Mouse, aufweist. Über diese Bedienvorrichtung kann der Zahntechniker alle notwendigen Einstellungen vornehmen und die Bearbeitung der Rohlinge steuern. Besonders bevorzugt ist vorgesehen, dass in einem Speicher der Steuer- oder Regeleinheit zumindest ein, ein zahntechnisches Werkstück repräsentierender Datensatz gespeichert ist, wobei in einem Bearbeitungsmodus der Steuer- oder Regeleinheit die Bearbeitungsvorrichtung und die erste oder zweite Haltevorrichtung derart ansteuerbar sind, dass aus einem in der ersten oder zweiten Haltevorrichtung gehaltenen Rohling das vom zumindest einen Datensatz repräsentierte zahntechnische Werkstück herausarbeitbar ist.

Zwischen den beiden Kammern kann auch eine Vorrichtung vorgesehen sein, welche die Bearbeitungsspindel reinigt, zum Beispiel trocknet oder den Staub entfernt, welcher durch das Bearbeiten eines Rohlings angefallen ist.

Schutz wird auch begehrt für die Verwendung der erfindungsgemäßen Bearbeitungsmaschine zum Herstellen von zahntechnischen Werkstücken aus einem Rohling. Hierzu kann bevorzugt vorgesehen sein, dass über die Bearbeitungsvorrichtung Rohlinge abwechselnd in der ersten Kammer und in der zweiten Kammer bearbeitet werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine Frontansicht der geschlossenen Bearbeitungsmaschine,
- Fig. 2: eine Frontansicht der Bearbeitungsmaschine ohne Gehäusehülle,
- Fig. 3: eine Frontansicht einer teilweise geöffneten Bearbeitungsmaschine mit synchronen Haltevorrichtungen,
- Fig. 4: eine Frontansicht einer teilweise geöffneten Bearbeitungsmaschine mit nicht synchronen Haltevorrichtungen,
- Fig. 5 bis 7: in Ansichten von schräg unten die Bewegung der Bearbeitungsspindel von der zweiten Kammer in die erste Kammer,
- Fig. 8: eine Frontansicht mit der Bearbeitungsspindel in der ersten Kammer,
- Fig. 9: eine schematische Darstellung der Begrenzungswand mit einem Faltenbalg,
- Fig. 10: eine schematische Darstellung der Begrenzungswand mit einem Sackelement,
- Fig. 11 bis 14: in verschiedenen Ansichten die Bewegung der Bearbeitungsspindel durch eine Durchtrittsöffnung in der Trennwand,
- Fig. 15 bis 17: Schnitte durch die Bearbeitungsmaschine bei der Bewegung der Bearbeitungsspindel durch die Durchtrittsöffnung und
- Fig. 18 bis 31: schematische Darstellungen diverser Ausführungsvarianten der Bearbeitungsmaschine.

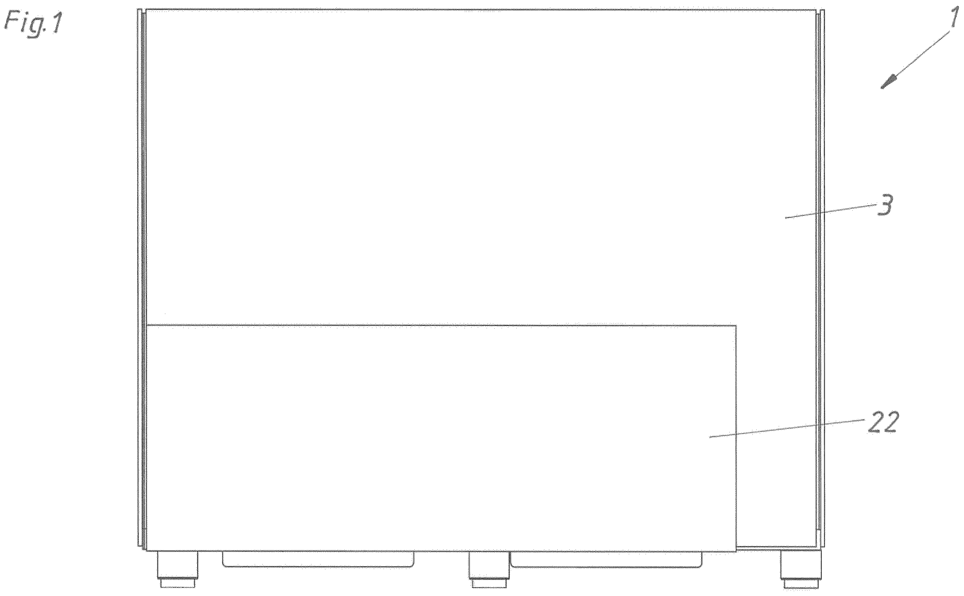

Fig. 1 zeigt die Bearbeitungsmaschine 1 in einer Frontansicht. Es ist nur die Außenseite des Gehäuses 3 erkennbar. Im unteren Bereich ist ein bewegbares, vorzugsweise verschiebbares, Abdeckelement 22 angeordnet.

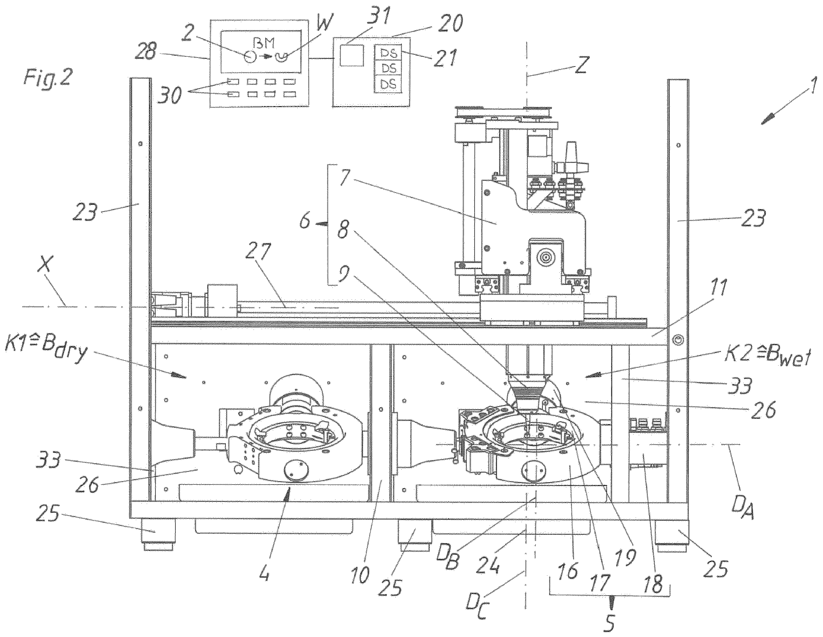

In Fig. 2 ist die Frontseite des Gehäuses 3 der Bearbeitungsmaschine ausgeblendet. Dadurch ist der Blick in das Innere der Bearbeitungsmaschine 1 frei. Das Gehäuse 3 weist zwei seitliche Rahmenelemente 23 auf. Die Rahmenelemente 23 sind im unteren Bereich durch eine Bodenplatte 24 miteinander verbunden. An der Bodenplatte 24 sind die Abstützfüße 25 angebracht. Im mittleren Bereich sind die Rahmenelemente 23 des Gehäuses 3 über eine Begrenzungswand 11 miteinander verbunden. Zwischen dieser Begrenzungswand 11 und der Bodenplatte 24 ist in vertikaler Richtung die Trennwand 10 angeordnet. Diese Trennwand 10 trennt die erste Kammer K1 von der zweiten Kammer K2. Beide Kammern K1 und K2 sind allseitig vom Gehäuse 3 umschlossen. Konkret werden die Kammern K1 und K2 teilweise von den Rahmenelementen 23, von den Seitenwänden 33, von der Bodenplatte 24, von der Begrenzungswand 11, von der Trennwand 10, von der Rückwand 26 und von der nicht dargestellten Frontwand (Abdeckelement 22) umschlossen und von diesen Komponenten gebildet. Dies stellt rein eine bevorzugte Ausgestaltung der Kammern K1 und K2 dar. Es kann auch sein, dass diese von dieser Darstellung abweichend ausgebildet sind. Bevorzugt sind die Kammern K1 und K2 jedoch in einem verschlossenen Zustand, in welchem auch eine Bearbeitung stattfindet, weitestgehend staub- und/oder wasserdicht.

In jeder der Kammern K1 und K2 befindet sich eine Haltevorrichtung 4 bzw. 5 für einen Rohling 2. Jede Haltevorrichtung 4, 5 weist einen um die Drehachse D_{A} drehbaren Außenring 16 und einen um die Drehachse D_{B} drehbaren Innenring 17 auf. Der Außenring 16 ist von der Antriebsvorrichtung 18 antreibbar und am Gehäuse 3 um die Drehachse D_{A} drehbar gelagert. Der Innenring 17 wiederum ist von der Antriebsvorrichtung 19 antreibbar und am Außenring 16 um die Drehachse D_{B} drehbar gelagert. Die Antriebsvorrichtungen 18 und 19 sind bevorzugt als Elektromotoren (Schrittmotoren oder Servomotoren) ausgebildet. Im bzw. am Innenring 17 ist ein Rohling 2 (hier nicht dargestellt) über Spann- bzw. Klemmelemente einspannbar. Die erste Haltevorrichtung 4 in der ersten Kammer K1 ist im Wesentlichen identisch zur zweiten Haltevorrichtung 5 ausgebildet. Die Haltevorrichtung 4 und 5 können auch so ausgestaltet sein, dass mehrere Rohlinge 2 eingespannt und bearbeitet werden können.

Jede der Kammern K1 und K2 bildet einen Bearbeitungsbereich zum Bearbeiten des Rohlings 2 durch die Bearbeitungsvorrichtung 6. Beispielsweise kann die erste Kammer K1 einen Bearbeitungsbereich B_{dry} zur Trockenbearbeitung die zweite Kammer K2 einen Bearbeitungsbereich B_{wet} zur Nassbearbeitung des jeweiligen Rohlings 2 bilden. Es kann auch in beiden Kammern K1 und K2 eine Trocken- oder Nassbearbeitung durchgeführt werden. Je nach Verwendung sind dann die entsprechenden Bauteile an die mechanische Beanspruchung und die zu bearbeitenden Werkstoffe angepasst. Die Bearbeitungsvorrichtung 6 weist eine Antriebsvorrichtung 7, eine Bearbeitungsspindel 8 und ein Bearbeitungswerkzeug 9 auf. Die Bearbeitungsvorrichtung 6 ist über zumindest eine Schiene 27 am Gehäuse 3, im Speziellen an dessen Begrenzungswand 11, in Richtung der Raumachse X linear bewegbar gelagert. Die Bearbeitungsspindel 8 ist von der Antriebsvorrichtung 7 in Richtung der Raumachse Z bewegbar. Optional ist auch noch eine Bewegung der Bearbeitungsspindel 8 in Richtung der Raumachse Y (rechtwinkelig zur Blattebene) möglich. Diese Bewegungen in zwei bzw. drei Raumrichtungen werden durch die Antriebsvorrichtung 7, vorzugsweise jeweils von einem Elektromotor, durchgeführt. Das Bearbeitungswerkzeug 9 wird von, vorzugsweise einem Elektromotor, der Antriebsvorrichtung 7 um die Drehachse D_{C} drehbar angetrieben. Sollte es nicht möglich sein die beiden Kammern K1 und K2 mechanisch perfekt voneinander abzutrennen, so kann auch ein leichter Überdruck in den Kammern K1 und K2 erzeugt werden.

In Fig. 2 ist zusätzlich schematisch eine Bedienvorrichtung 28 mit einer Anzeigevorrichtung 29 (Bildschirm) und einer Eingabevorrichtung 30 (Tastatur und/oder Mouse und/oder berührungsempfindlicher Bildschirm) dargestellt. Diese Bedienvorrichtung 28 ist mit der Steuer- oder Regeleinheit 20 verbunden bzw. weist diese auf. Die Steuer- oder Regeleinheit 20 setzt sich aus dem Prozessor 31 und dem Speicher 21 zusammen. Die Steuer- oder Regeleinheit 20 ist signaltechnisch mit der Bearbeitungsvorrichtung 6 und mit den beiden Haltevorrichtung 4 und 5 der Bearbeitungsmaschine 1 verbunden. Im Speicher 21 sind mehrere Datensätze DS hinterlegt. Diese Datensätze DS repräsentieren zahntechnische Werkstücke W. Bevorzugt repräsentieren diese Datensätze DS ein dreidimensionales Modell (Punktwolke) des zahntechnischen Werkstücks W. Im Bearbeitungsmodus BM der Steuer- oder Regeleinheit 20 werden die Bearbeitungsvorrichtung 6 und eine der Haltevorrichtungen 4 oder 5 derart angesteuert, dass aus einem eingespannten Rohling 2 das zahntechnische Werkstück W herausgearbeitet wird. Dieser Vorgang ist repräsentativ an der Anzeigevorrichtung 29 der Bedienvorrichtung 28 dargestellt.

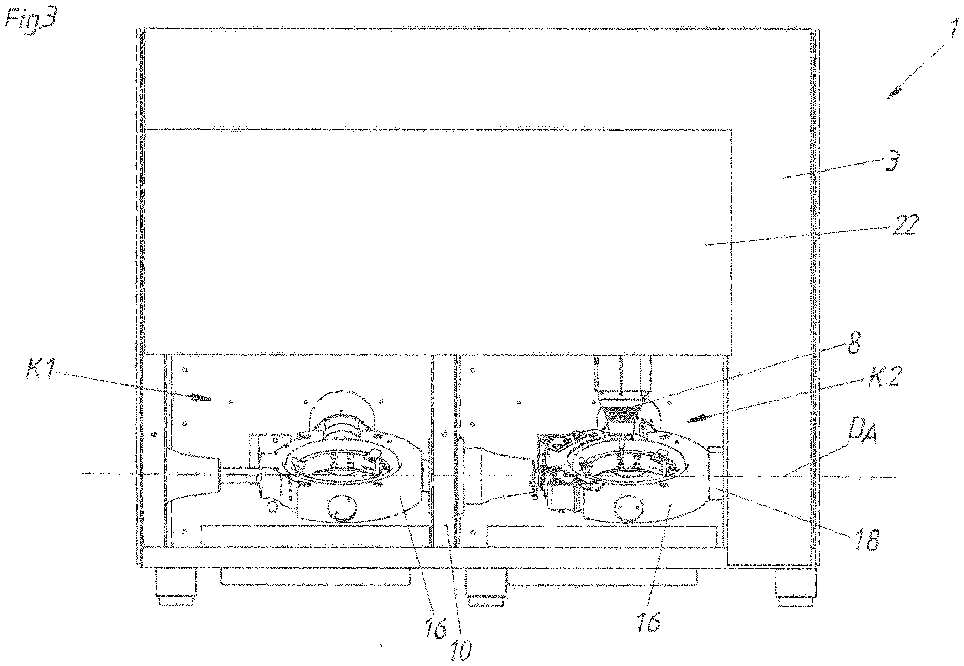

In Fig. 3 ist wieder die Frontwand des Gehäuses 3 der Bearbeitungsmaschine 1 dargestellt, wobei das Abdeckelement 22 nach oben bewegt wurde und somit den Blick auf die beiden Kammern K1 und K2 freigibt. Mit dieser Fig. 3 soll verdeutlicht werden, dass die Außenringe 16 der beiden Haltevorrichtungen 4 und 5 von einer gemeinsamen Antriebsvorrichtung 18 synchron um die Drehachse D_{A} drehbar antreibbar sind. Dazu sind die beiden Haltevorrichtungen 4 und 5 durch die Trennwand 10 hindurch entsprechend miteinander gekoppelt.

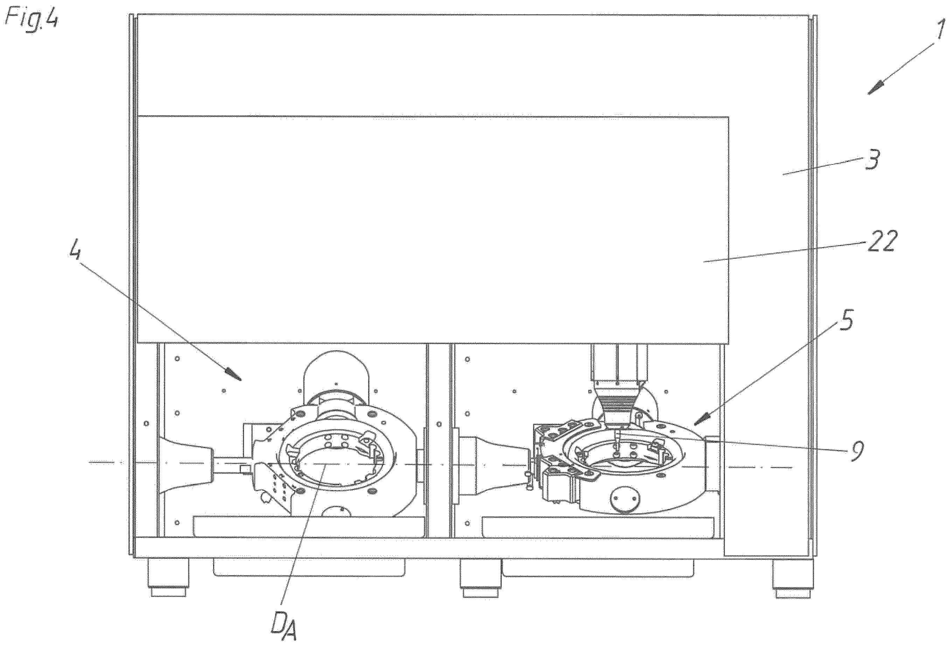

Im Gegensatz dazu sind in Fig. 4 die beiden Haltevorrichtungen 4 und 5 nicht miteinander gekoppelt. Somit können die Außenringe 16 der beiden Haltevorrichtungen 4 und 5 unabhängig voneinander um die Drehachse D_{A} bewegt werden.

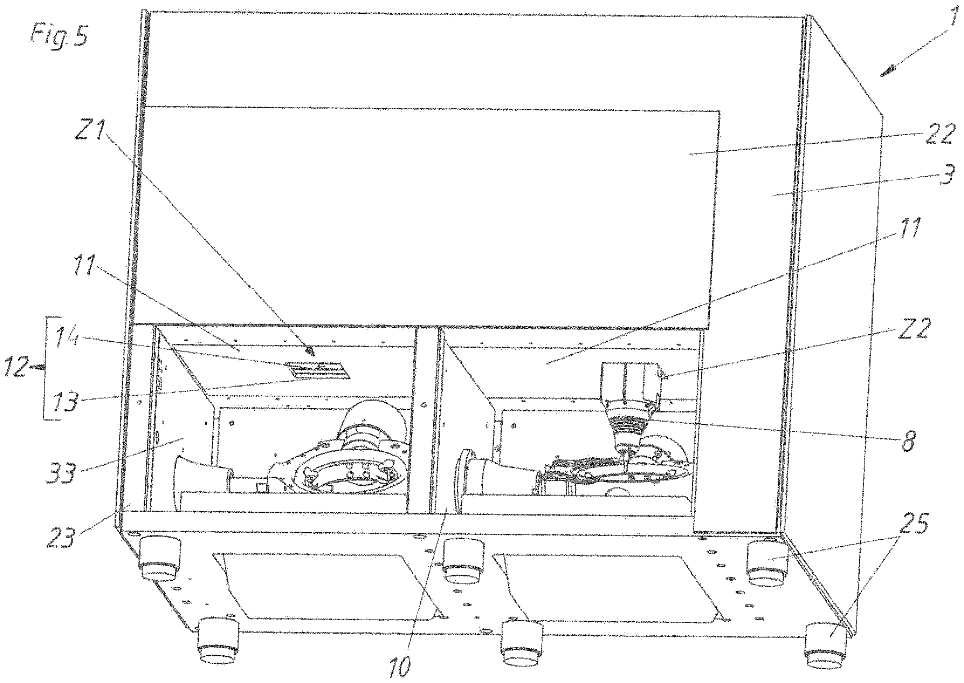

Fig. 5 zeigt die Bearbeitungsmaschine 1 in einer perspektivischen Ansicht von schräg unten. Dadurch ist der Blick auf die Oberfläche der Begrenzungswand 11 frei. Im Bereich der zweiten Kammer K2 weist die Begrenzungswand 11 die zweite Zugangsöffnung Z2 auf, durch welche die Bearbeitungsspindel 8 der Bearbeitungsvorrichtung 6 in die zweite Kammer K2 hineinragt. Auch in der Begrenzungswand 11 zur ersten Kammer K1 ist eine - allerdings verschlossene - erste Zugangsöffnung Z1 ausgebildet. Diese erste Zugangsöffnung Z1 ist durch eine Verschlussmechanismus 12 verschlossen. Dieser Verschlussmechanismus 12 weist einen Rahmen 13 und eine am Rahmen 13 bewegbar gelagerte Verschlusstür 14 auf. Die Bewegung der Verschlüsstür 14 kann elektrisch, hydraulisch oder pneumatisch angesteuert werden.

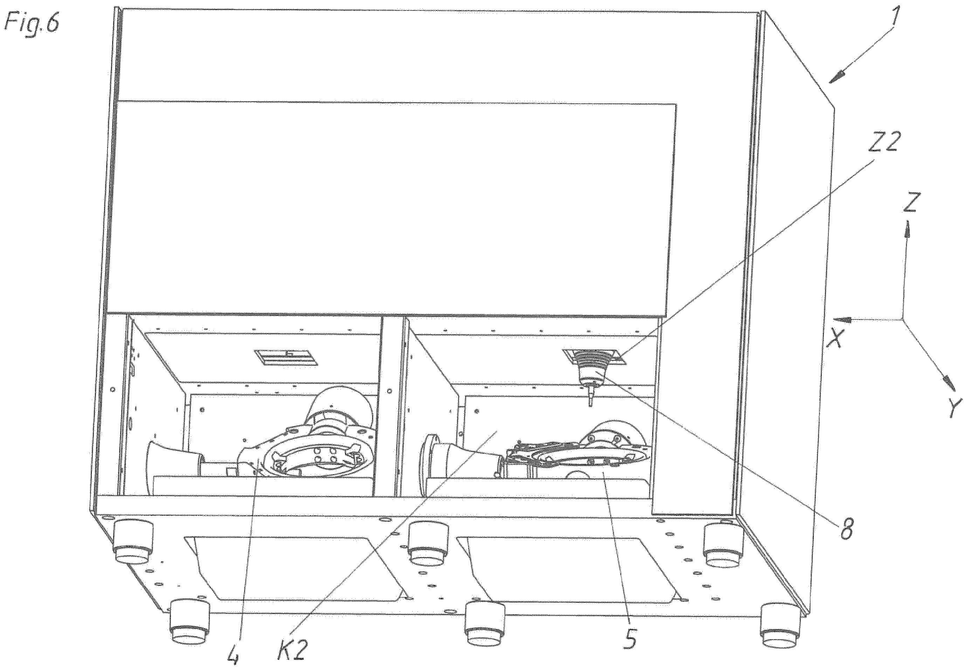

Gemäß Fig. 6 bewegt sich die Bearbeitungsspindel 8 in Richtung der Raumachse Z durch die zweite Zugangsöffnung Z2 aus der zweiten Kammer K2 hinaus.

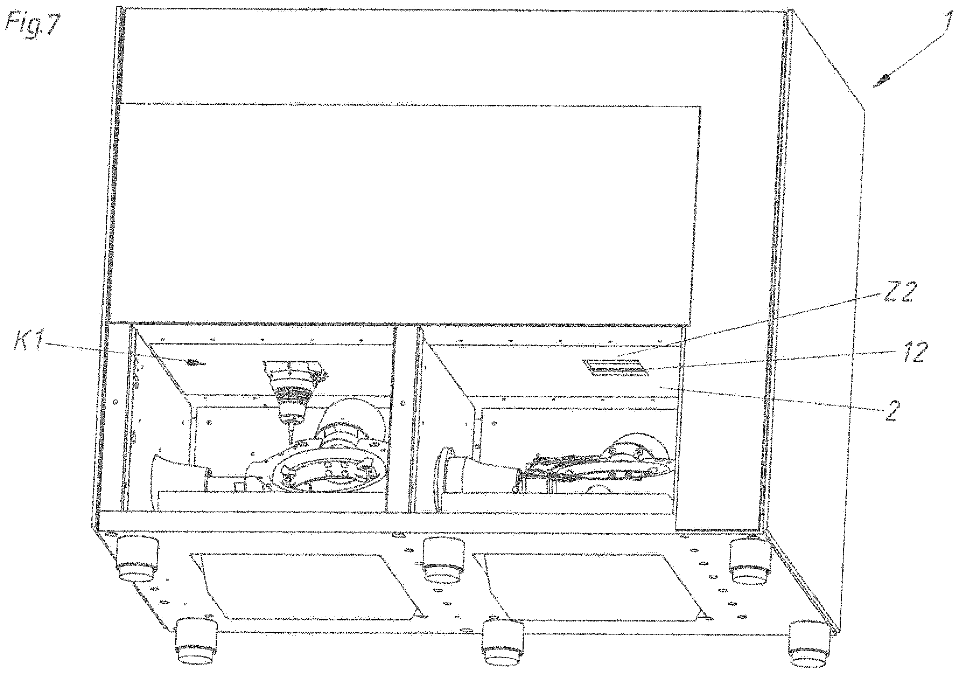

In Fig. 7 ist die Bearbeitungsspindel 8 der Bearbeitungsvorrichtung 6 nun durch die (geöffnete) erste Zugangsöffnung Z1 in die erste Kammer K1 eingefahren. Die Zugangsöffnung Z2 zur zweiten Kammer K2 ist verschlossen. Theoretisch können die Zugangsöffnungen Z1 und Z2 auch offen bleiben, da die Kammer K1 bzw. K2, in der gearbeitet wird, über die eingefahrene Bearbeitungsvorrichtung 6 verschlossen ist.

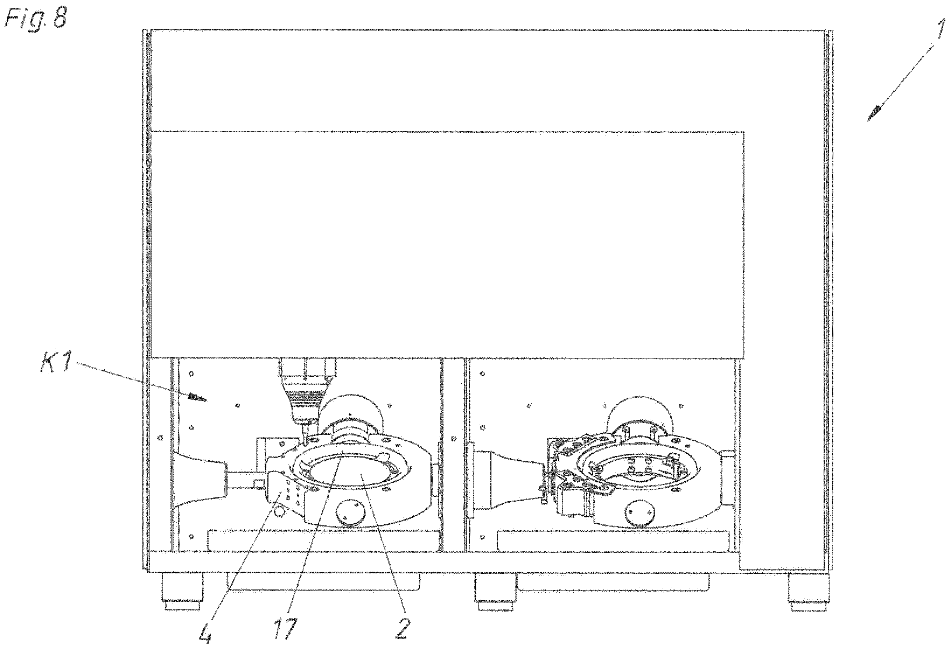

Fig. 8 zeigt in einer zu Fig. 7 korrespondierenden Frontansicht, dass sich die Bearbeitungsspindel 8 der Bearbeitungsvorrichtung 6 in die erste Kammer K1 bewegt hat. In dieser Kammer K1 ist auch der im Innenring 17 der ersten Haltevorrichtung 4 eingespannte Rohling 2 dargestellt.

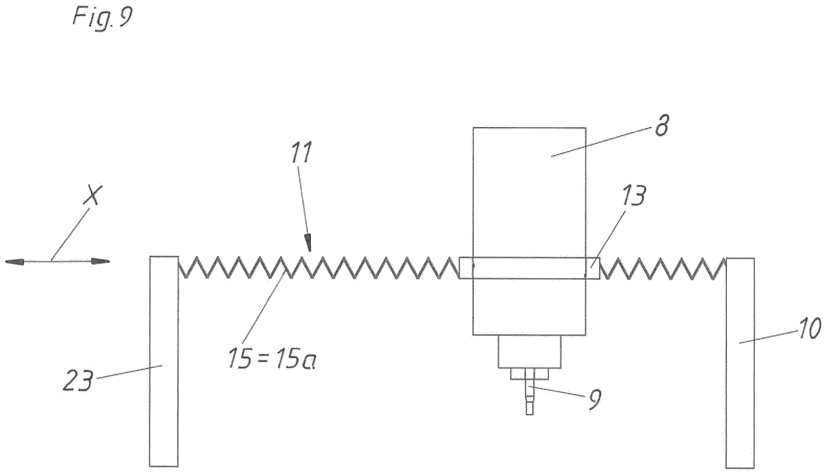

In Fig. 9 ist schematisch dargestellt, dass die Begrenzungswand 11 zumindest teilweise als nachgiebiges Wandelement 15 ausgebildet. Konkret ist dieses nachgiebige Wandelement 15 als Faltenbalg 15a ausgebildet. Mit diesem Faltenbalg 15a ist der Verschlussmechanismus 12 der Zugangsöffnung Z1 bzw. Z2 verbunden. Konkret ist der Rahmen 13 des Verschlussmechanismus 12 am Faltenbalg 15a befestigt. Die Bearbeitungsspindel 8 der Bearbeitungsvorrichtung 6 ist durch diesen Rahmen 13 hindurch in die Kammer K1 bzw. K2 eingefahren. Aufgrund des nachgiebigen Wandelements 15 in Form des Faltenbalgs 15a kann die Bearbeitungsvorrichtung 6 in Richtung der Raumachse X bewegt werden. Hier kann zum einen eine eigene Zugangsöffnung für die Kammer K1 und die Kammer K2 vorgesehen sein oder man hat nur eine Zugangsöffnung. Im zweiten Fall kann dann jedoch der Faltenbalg so weit bewegt werden, dass über die eine Zugangsöffnung beide Kammern K1 und K2 erreicht werden können. Hier kann dann auch noch ein Faltenbalg für die Y Richtung vorgesehen werden.

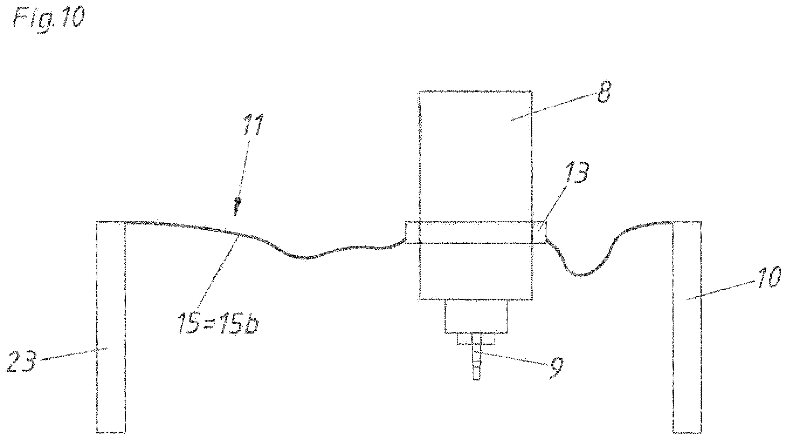

Gemäß Fig. 10 ist das nachgiebige Wandelement 15 als Sackelement 15b ausgebildet. Dadurch ist für die durch die Zugangsöffnung Z1 bzw. Z2 eingefahrene Bearbeitungsspindel 8 nicht nur eine Bewegung in Richtung der Raumachse X möglich, sondern auch eine Bewegung in Richtung der Raumachse Y (rechtwinkelig zu Blattebene). Dieses Sackelement 15b kann beispielsweise aus einem staub- und wasserdichten Stoff oder aus einem Kunststoff bestehen. Das Sackelement 15b sollte eine Bewegung der Bearbeitungsvorrichtung 6 in alle Raumrichtungen zumindest soweit ermöglichen, dass das Bearbeitungswerkzeug 9 sämtliche Bereiche des in der jeweiligen Haltevorrichtung 4, 5 eingespannten Rohlings 2 erreichen kann.

Weitere hier nicht dargestellte Lösungen können sein, dass an Stelle des Faltenbalges eine aufrollbare Plane verwendet wird oder ein Blech, welches mit der Bearbeitungsvorrichtung 6 mitfährt und dann, je nachdem auf welcher Seite gearbeitet wird, übersteht.

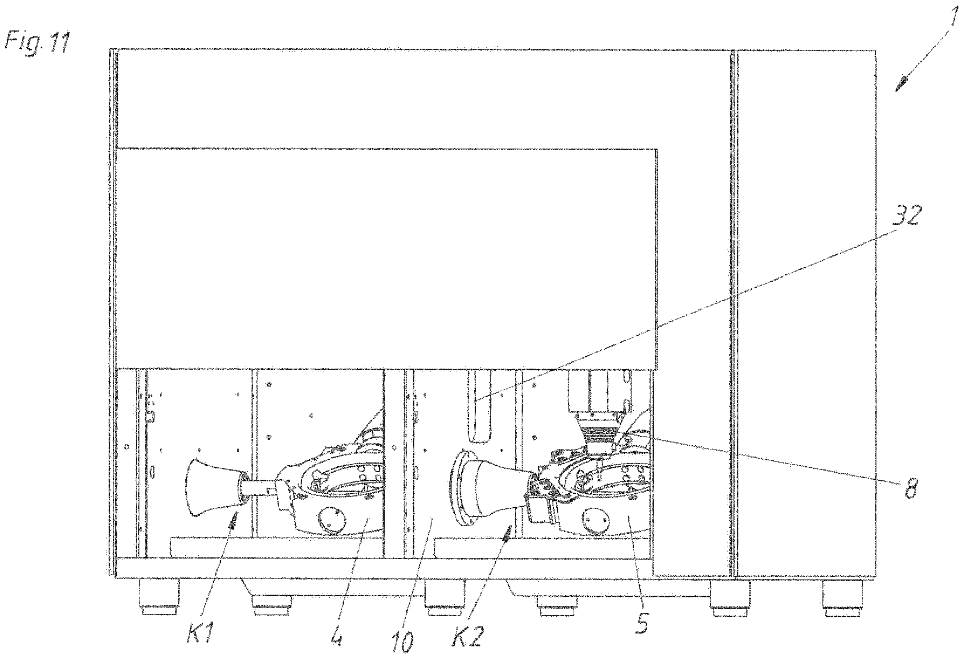

In Fig. 11 ist dargestellt, dass in der Trennwand 10 eine Durchtrittsöffnung 32 ausgebildet ist. Somit kann die Bearbeitungsvorrichtung 6 direkt durch die Trennwand 10 hindurch zwischen den Kammern K1 und K2 wechseln. In diesem Fall würde beispielsweise nur eine Zugangsöffnung benötigt werden.

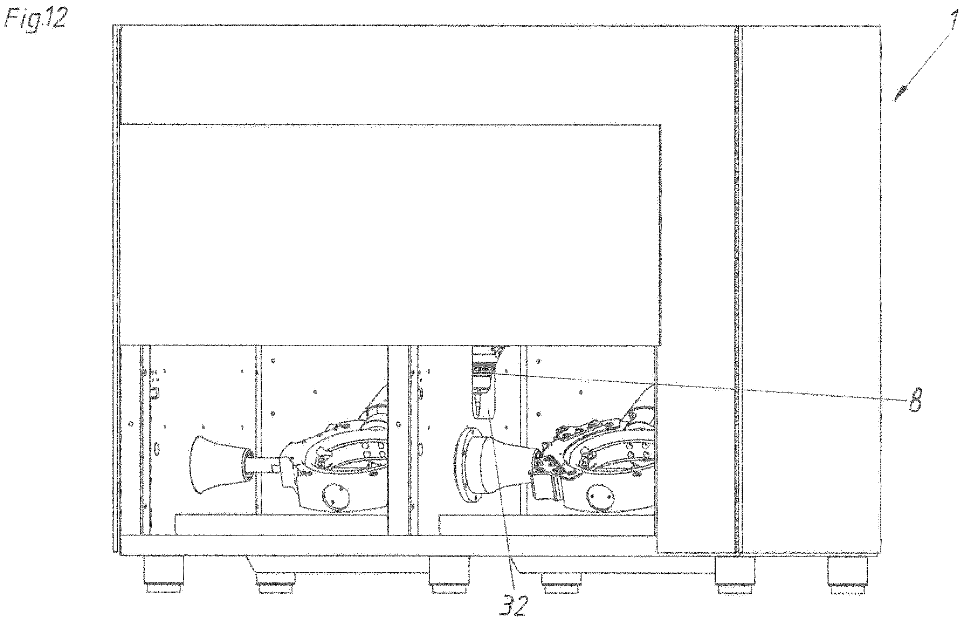

In Fig. 12 wechselt die Bearbeitungsspindel 8 der Bearbeitungsvorrichtung 6 gerade von der zweiten Kammer K2 in die erste Kammer K1.

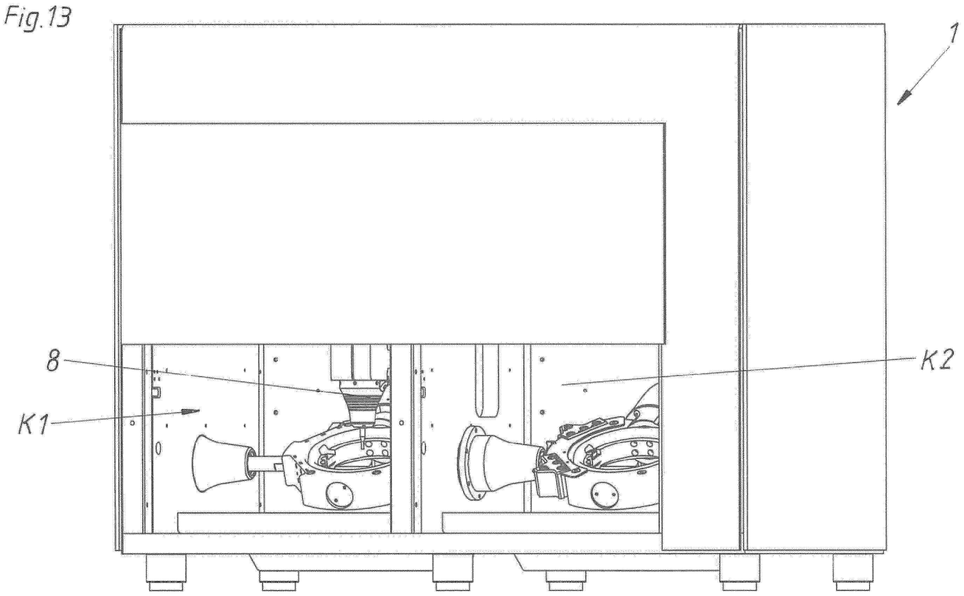

Gemäß Fig. 13 hat die Bearbeitungsspindel 8 die erste Kammer K1 erreicht.

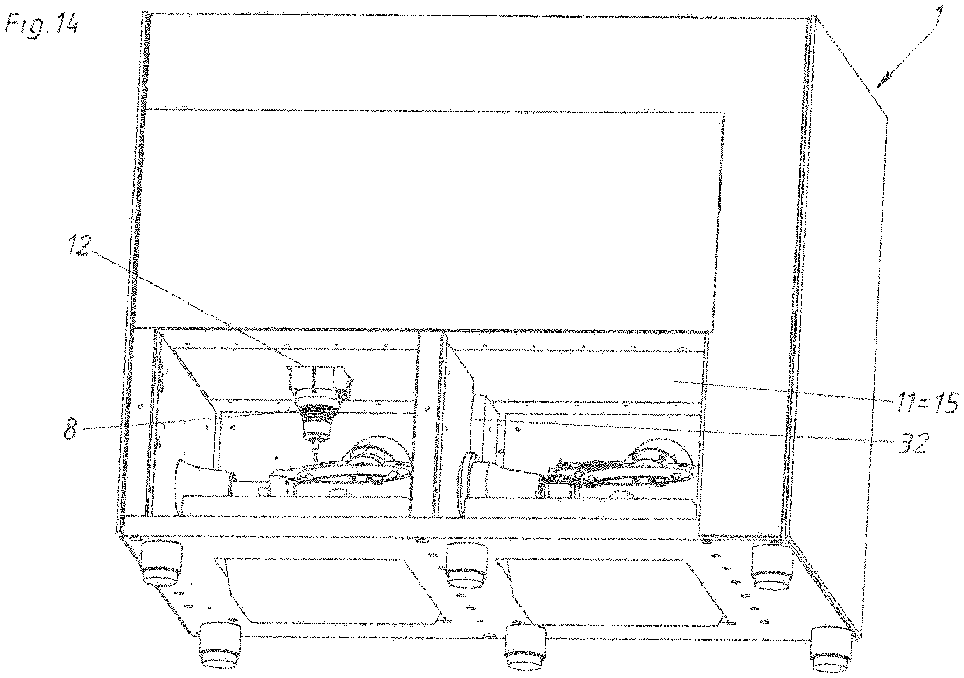

In Fig. 14 ist erkennbar, dass bei dieser nicht erfindungsgemäßen Ausführungsvariante mit der Durchtrittsöffnung 32 nur eine Zugangsöffnung mit einem Verschlussmechanismus 12 in der Begrenzungswand 11 notwendig ist, sofern die Begrenzungswand 11 zumindest teilweise als nachgiebiges Wandelement 15 ausgebildet ist. Dadurch muss die Bearbeitungsspindel 8 für einen Wechsel zwischen den Kammern K1 und K2 gar nicht in Richtung der Raumachse Z durch die Zugangsöffnung hinausfahren.

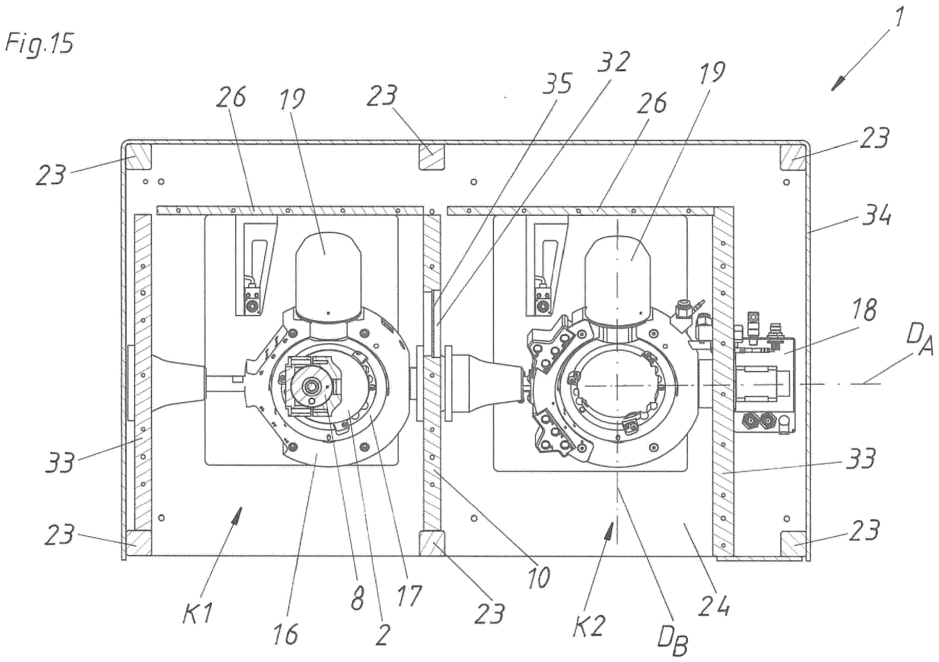

In Fig. 15 ist ein horizontaler Schnitt durch die Bearbeitungsmaschine 1 korrespondierend zu Fig. 14 dargestellt. Das Gehäuse 3 umfasst dabei als äußere Hülle die an den Rahmenelementen 23 befestigte Gehäusehülle 34. Die beiden Kammern K1 und K2 werden konkret von den Seitenwänden 33, der Trennwand 10, den Rückwänden 26, der Bodenplatte 24, der nicht dargestellten Begrenzungswand 11 und dem ebenfalls nicht dargestellten Abdeckelement 22 begrenzt. In Fig. 15 sind auch die beiden Haltevorrichtung 4 und 5 mit deren Außenringen 16, Innenringen 17 und den Antriebsvorrichtungen 18 und 19 dargestellt. In der Trennwand 10 ist die durch ein Verschlusselement 35 verschlossene Durchtrittsöffnung 32 ausgebildet.

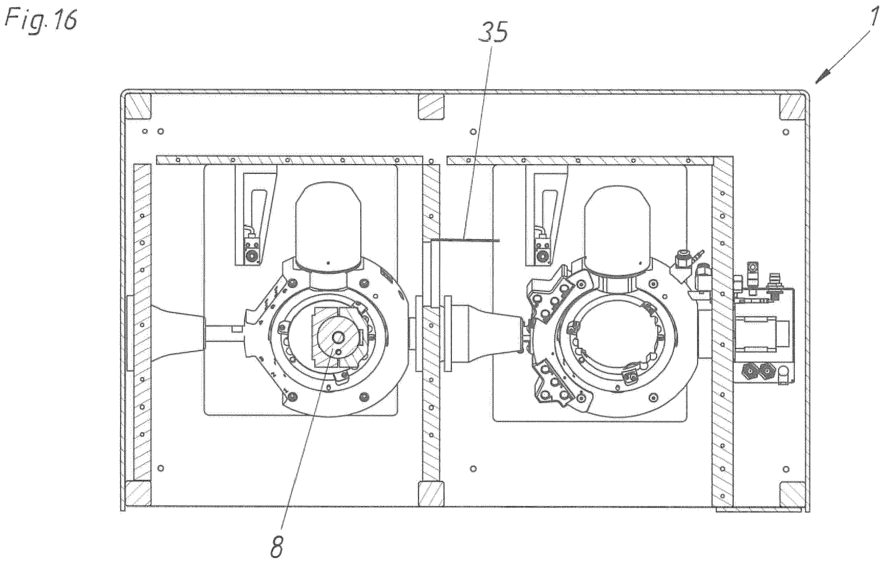

In Fig. 16 hat sich das Verschlusselement 35 geöffnet. Die Öffnungsbewegung kann elektrisch, pneumatisch,hydraulisch oder auf sonstige Art und Weise ausgelöst werden. Beispielsweise kann das Verschlusselement 35 über Federkraft verschlossen sein und wird von der durchfahrenden Bearbeitungsspindel 8 aufgedrückt.

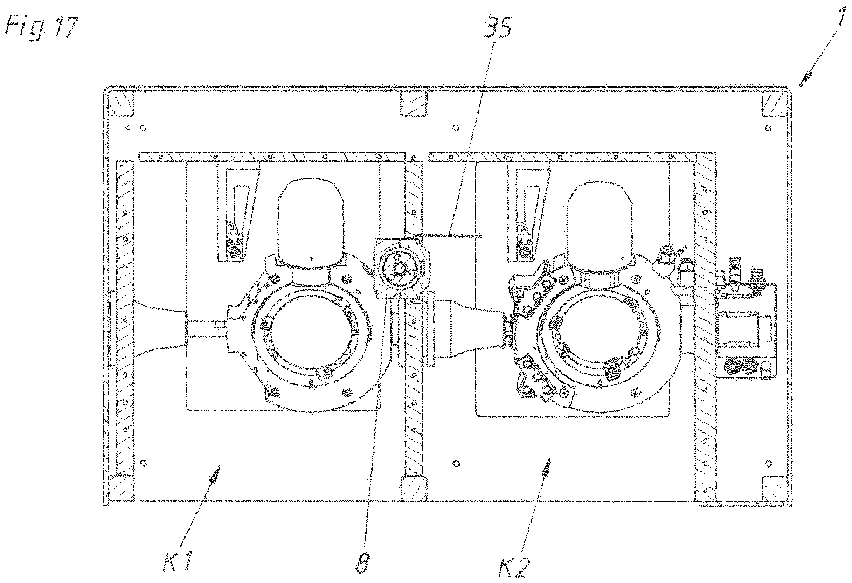

Gemäß Fig. 17 bewegt sich die Bearbeitungsspindel 8 der Bearbeitungsvorrichtung 6 durch die Durchtrittsöffnung 32 hindurch von der ersten Kammer K1 in die zweite Kammer K2.

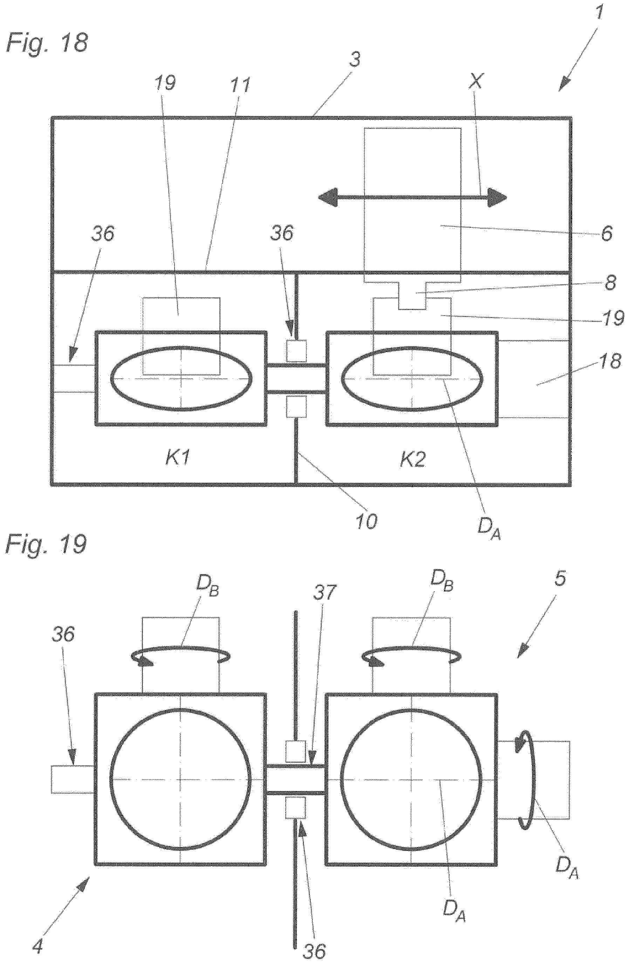

Ab Fig. 18 werden die wesentlichen Komponenten der Bearbeitungsmaschine 1 nur mehr schematisch dargestellt, um unterschiedliche Ausführungsvarianten kurz näher zu erläutern.

Gemäß Fig. 18 sieht der grundsätzliche Aufbau vor, dass die Antriebsvorrichtungen 7 für die Bewegung der Bearbeitungsvorrichtung 6 in den Raumachsen X, Y und Z auf dem Maschinenbett befestigt werden und die Bearbeitungsspindel 8 führen. Das Maschinenbett ist an der Begrenzungswand 11 befestigt. Unter der Bearbeitungsspindel 8 liegen in den Kammern K1 und K2 die Bearbeitungsbereiche B_{dry} bzw. B_{wet}. Natürlich können aber auch beide Bearbeitungsbereiche zur Trocken- oder zur Nassbearbeitung verwendet werden. Die Kammern K1 und K2 beinhalten die Werkzeugaufnahme (Haltevorrichtungen 4 und 5), wobei die Kammern K1 und K2 durch eine Trennwand 10 voneinander separiert sind. Anders ausgedrückt hat man einen Bearbeitungsraum, welcher durch eine Trennwand 10 geteilt ist. Die Außenringe 16 der beiden Haltevorrichtungen 4 und 5 werden gemäß Fig. 18 durch eine gemeinsame Antriebsvorrichtung 18 drehbar angetrieben. Dafür sind Stützlager 36 im Bereich der Trennwand 10 und im Bereich der Seitenwand 33 vorgesehen. Die beiden Innenringe 17 werden jeweils durch eine eigenständige Antriebsvorrichtungen 19 drehbar angetrieben.

Gemäß Fig. 19 sind beide Haltevorrichtungen 4 und 5 um die Drehachse D_{A} drehbar gelagert. Zusätzlich verfügen diese Haltevorrichtungen 4 und 5 dann noch über eine zweite Drehachse D_{B}. Diese beiden Drehachsen D_{A} und D_{B} stehen in der Regel in einem Winkel von 90° zueinander. Eine solche Rohlingaufnahme bestehend aus den beiden Haltevorrichtungen 4 und 5 kann in den beiden Bearbeitungsbereichen vorgesehen werden. Je nach der durchzuführenden Bearbeitung können diese dann spezielle Ausgestaltungen aufweisen. In der Grundidee werden die beiden Haltevorrichtungen 4 und 5 um die erste Drehachse D_{A} synchron bewegt. Um dies zu realisieren, sind diese starr miteinander verbunden (Verbindungselement 37). Die zweiten Drehachsen D_{B} der beiden Haltevorrichtungen 4 und 5 können dann unabhängig voneinander bewegt werden. Dies bietet den Vorteil, dass man für die Bewegung der Haltevorrichtungen 4 und 5 um die erste Drehachse D_{A} nur einen Antrieb (Antriebsvorrichtung 18) benötigt.

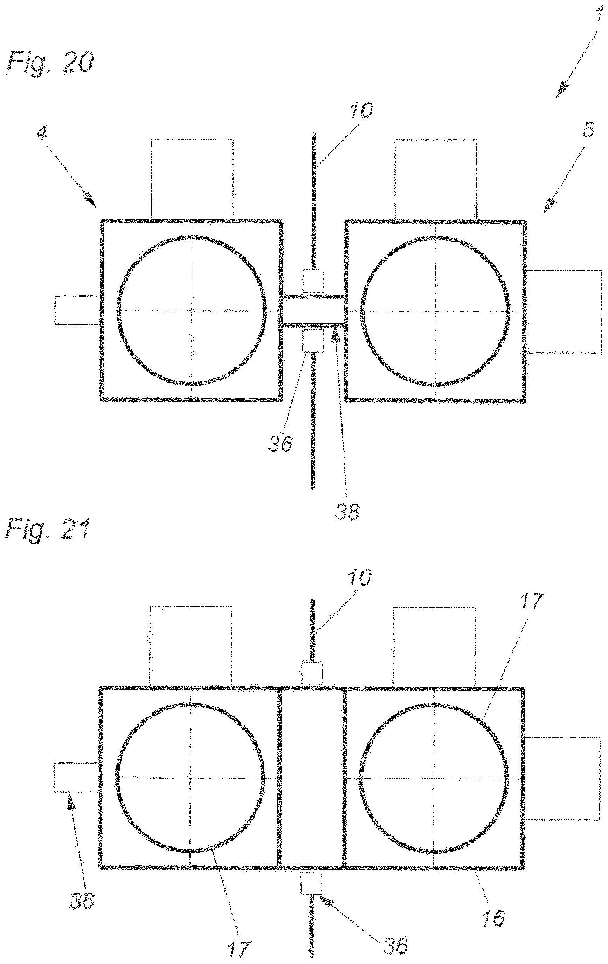

In einer weiteren Ausgestaltung gemäß Fig. 20 kann vorgesehen sein, dass die beiden Haltevorrichtungen 4 und 5 über eine Kupplung 38 miteinander verbunden sind. Sollte es nötig sein, beispielsweise den Bearbeitungsbereich der ersten Kammer 1 neu zu beladen, während in der zweiten Kammer K2 gearbeitet wird, kann die erste Haltevorrichtung 4 entkoppelt werden, und der Benutzer kann ohne Gefahr auf diesen Bereich zugreifen. Nachdem die erste Haltevorrichtung 4 beladen ist, können die beiden Haltevorrichtungen 4 und 5 dann wieder gekoppelt werden.

Fig. 21: Eine andere Variante sieht vor, dass die beiden Haltevorrichtungen 4 und 5 aus einem Teil (gemeinsamer Außenring 16) bestehen, welches sich um die erste Drehachse D_{A} dreht. Lediglich die Innenringe 17, welche sich um die zweite Rotationsachse D_{B} drehen, sind getrennt voneinander. Diese einstückige Rohlingaufnahme wird dann durch die Trennwand 10 geführt.

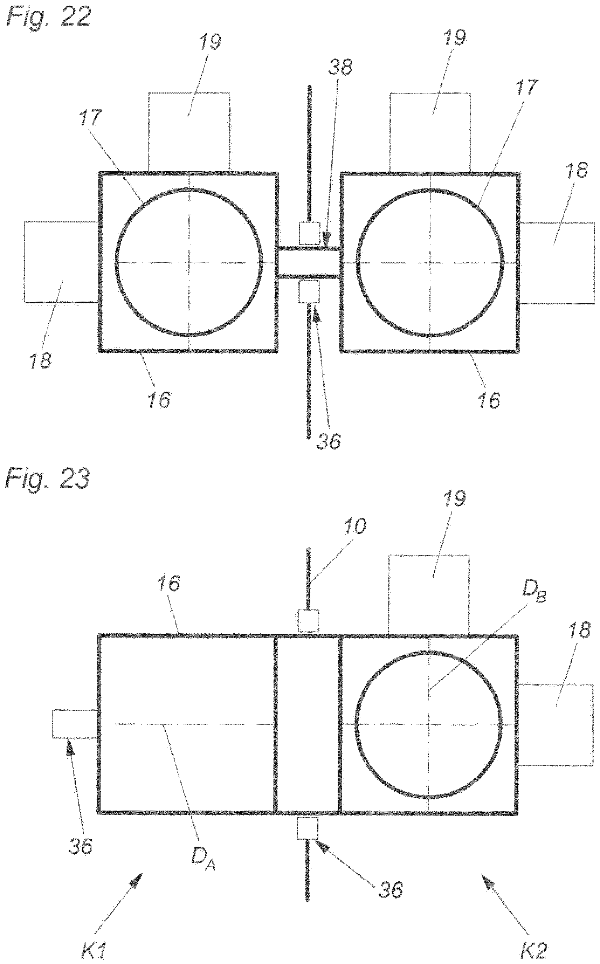

Gemäß Fig. 22 kann auch vorgesehen sein, dass beide Haltevorrichtung 4 und 5 über getrennte Antriebsvorrichtung 18 für die Bewegung um die erste Rotationsachse D_{A} verfügen. Somit muss keine Kupplung 38 vorgesehen sein, sie kann jedoch vorgesehen sein.

In allen Varianten kann vorgesehen sein, dass in der Trennwand 10 oder an einer Seitenwand 33 eine Stützlagerung 36 vorgesehen ist. Im Speziellen ist dies der Fall bei der starren Verbindung. Je nach Variante und Ausgestaltung unterscheidet sich dann auch der grundsätzliche Aufbau, was bedeutet, dass die Antriebe, Lager, Getriebe usw. an unterschiedlichen Positionen angeordnet werden können.

In Fig. 23 ist der Außenring 16 für beide Haltevorrichtungen 4 und 5 einstückig ausgeführt. Die Haltevorrichtung 4 in der ersten Kammer K1 verfügt über keine getrennte zweite Drehachse D_{B}. Dies kann überall der Fall sein, dass die zweite Drehachse D_{B} entfällt.

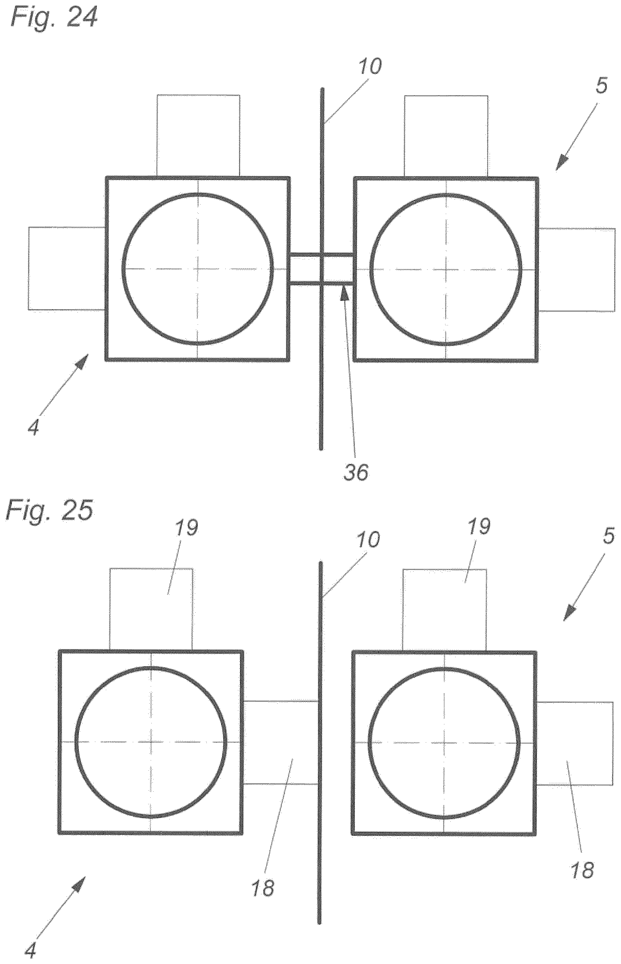

Fig. 24: Hier werden zwei komplett getrennte Haltevorrichtungen 4 und 5 dargestellt, welche lediglich bei der Trennwand 10 gegengelagert werden. So können beide Bereiche komplett unabhängig voneinander angesteuert werden.

Fig. 25: Prinzipiell ist dies derselbe Aufbau wie in Fig. 24, nur dass in diesem Fall die Antriebe anders positioniert sind und keine Stützlager 36 vorgesehen werden.

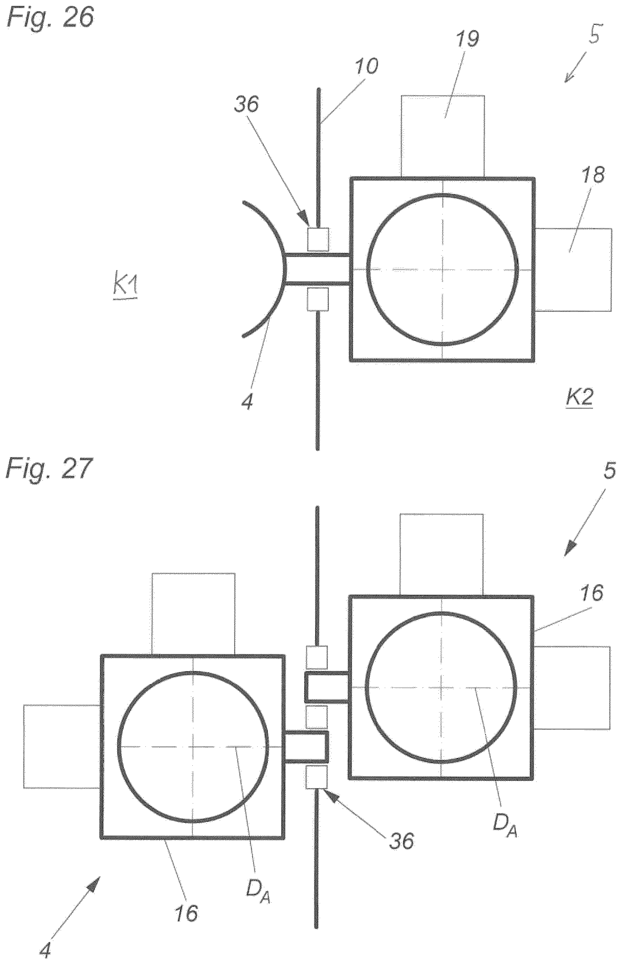

Gemäß Fig. 26 ist in der ersten Kammer K1 nur eine Haltevorrichtung 4 für kleine Rohlinge 2 vorgesehen. Dies Variante kann Verwendung finden, wenn beispielsweise Abutments hergestellt werden. Hier muss sich der Rohling 2 bzw. das entstehende Werkstück W nur drehen können.

Fig. 27 soll veranschaulichen, dass die Drehachsen D_{A}, sofern getrennte Haltevorrichtungen 4 und 5 vorliegen, nicht in einer Linie angeordnet sein müssen.

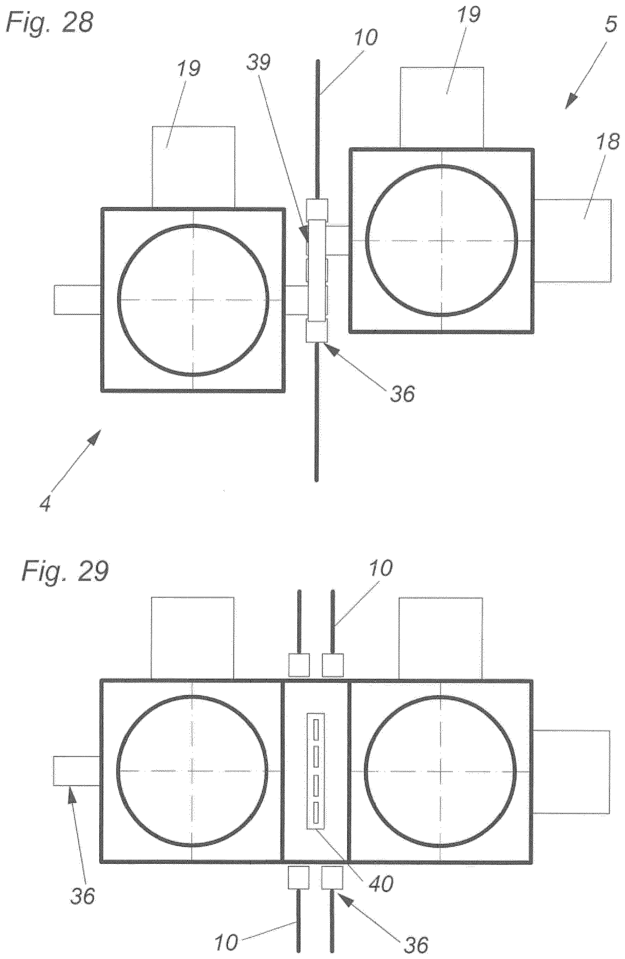

In Fig. 28 ist zusätzlich zu der Versetzung der Achsen noch angedacht, dass die erste Haltevorrichtung 4 über eine Übersetzung mit der zweiten Haltevorrichtung 5 verbunden ist. Diese Übersetzung kann über einen Riementrieb oder über Zahnräder (Bezugszeichen 39) erreicht werden. Somit können unterschiedliche Rotationsgeschwindigkeiten erreicht werden und dadurch auch unterschiedliche Drehmomente.

An Stelle einer einzigen Trennwand 10 können gemäß Fig. 29 auch zwei Trennwände 10 vorgesehen sein. Zwischen den Trennwänden 10 kann dann ein Werkzeugmagazin 40 angeordnet werden, welches sich in einem vor Schmutz abgetrennten Bereich befindet.

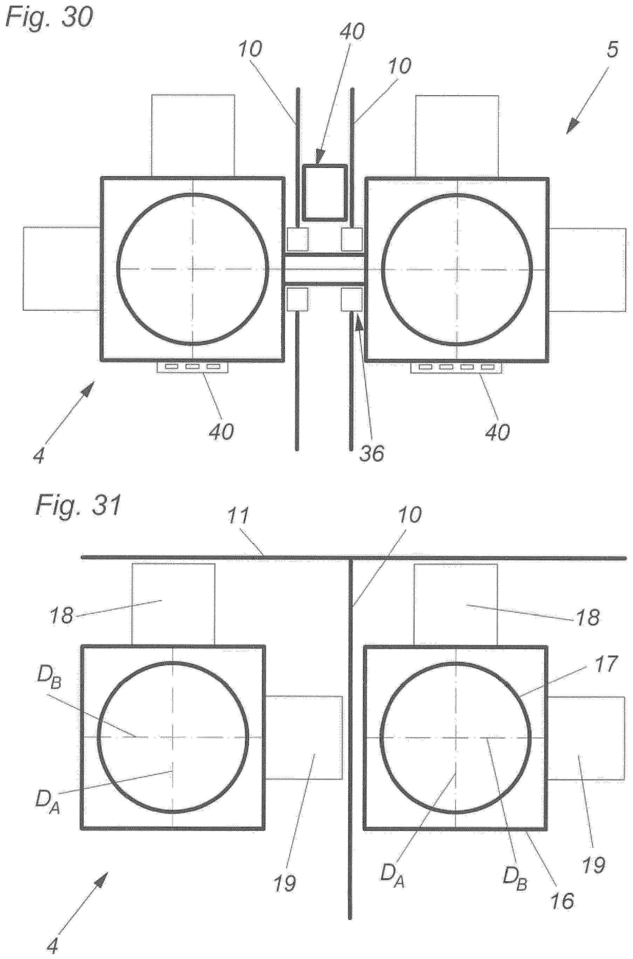

Fig. 30 zeigt wie Fig. 29 die doppelte Trennwand 10, jedoch sind hier die Werkzeugmagazine 40 auch direkt auf den Außenringen 16 angebracht. Wenn eine doppelte Trennwand 10 vorgesehen ist, dann benötigt diese idealerweise in beiden Wandteilen eine Durchtrittsöffnung, sofern die Bearbeitungsspindel 8 nicht von der ersten in die zweite Zugangsöffnung (oder umgekehrt) fährt und sie in diesem Zuge auch im Bereich zwischen den beiden Wandteilen ein Bearbeitungswerkzeug holt.

Fig. 31: Hier soll nochmal dargestellt werden, wie die Antriebe noch in der Bearbeitungsmaschine 1 befestigt werden. Bei den bisher beschriebenen Varianten ist ja die Grundidee so aufgebaut, dass die Antriebsvorrichtung 18 der ersten Rotationsachse (D_{A}) an einer Seitenwand 33 der Bearbeitungsmaschine 1 angebracht ist und dann die Antriebsvorrichtung 19 der zweiten Rotationsachse (D_{B}) auf dem rotierenden ersten Teil (Außenring 16) der Haltevorrichtung 4 bzw. 5 befestigt wird. Fig. 31 soll zeigen, dass es auch eine umgekehrte Anordnung möglich ist. Hier ist die Antriebsvorrichtung 18 der Drehachse D_{A} der Außenringe 16 an der Begrenzungswand 11 der Bearbeitungsmaschine 1 angeordnet. Die Antriebsvorrichtung 19 der Drehachse D_{B} ist auf dem Außenring 16 montiert und treibt den Innenring 17 an. Somit sind die beiden Drehachsen D_{A} und D_{B} gegenüber den vorherigen Ausführungsvarianten umgekehrt zueinander (bzw. jeweils um 90° versetzt) ausgerichtet. Es kann auch der Fall sein, dass eine Haltevorrichtung 4 bzw. 5 nach den vorigen Varianten und die andere Haltevorrichtung 5 bzw. 4 nach dieser Variante gemäß Fig. 31 ausgeführt ist.

Abschließend seien noch die Vorteile der vorliegenden Erfindung auf einem Blick angeführt:
- Getrennte Nass- und Trockenbearbeitung möglich
- Nur eine Steuer- oder Regeleinheit notwendig
- zumindest zwei Rohlinge können nacheinander autonom bearbeitet werden
- Die erste Rotationsasche (D_{A}) kann für beide Haltevorrichtung (Werkstückhalter) mit demselben Antrieb bewegt werden
- Kostengünstig, da nur eine Bearbeitungsvorrichtung notwendig

### Bezugszeichenliste:

- 1: Bearbeitungsmaschine
- 2: Rohling
- 3: Gehäuse
- 4: erste Haltevorrichtung
- 5: zweite Haltevorrichtung
- 6: Bearbeitungsvorrichtung
- 7: Antriebsvorrichtung
- 8: Bearbeitungsspindel
- 9: Bearbeitungswerkzeug
- 10: Trennwand
- 11: Begrenzungswand
- 12: Verschlussmechanismen
- 13: Rahmen
- 14: Verschlusstüre
- 15: nachgiebiges Wandelement
- 15a: Faltenbalg
- 15b: Sackelement
- 16: Außenring
- 17: Innenring
- 18: Antriebsvorrichtung für Außenring(e)
- 19: Antriebsvorrichtung für Innenring(e)
- 20: Steuer- oder Regeleinheit
- 21: Speicher
- 22: Abdeckelement
- 23: Rahmenelemente
- 24: Bodenplatte
- 25: Abstützfüße
- 26: Rückwand
- 27: Schienen
- 28: Bedienvorrichtung
- 29: Anzeigevorrichtung
- 30: Eingabevorrichtung
- 31: Prozessor
- 32: Durchtrittsöffnung
- 33: Seitenwände
- 34: Gehäusehülle
- 35: Verschlusselement
- 36: Stützlager
- 37: Verbindungselement
- 38: Kupplung
- 39: Riementrieb oder Zahnräder
- 40: Werkzeugmagazin
- K1: erste Kammer
- K2: zweite Kammer
- W: zahntechnisches Werkstück
- B_{dry}: Bearbeitungsbereich zur Trockenbearbeitung
- B_{wet}: Bearbeitungsbereich zur Nassbearbeitung
- Z1: erste Zugangsöffnung
- Z2: zweite Zugangsöffnung
- D_{A}: Drehachse der Außenringe
- D_{B}: Drehachse der Innenringe
- D_{C}: Drehachse für Bearbeitungswerkzeug
- BM: Bearbeitungsmodus
- DS: Datensatz
- X: Raumachse
- Y: Raumachse
- Z: Raumachse

## Patentansprüche

1. Bearbeitungsmaschine (1) für die Herstellung von zahntechnischen Werkstücken (W) aus einem Rohling (2), mit
- einem Gehäuse (3), in welchem eine erste Kammer (K1) und eine von der ersten Kammer (K1) getrennte zweite Kammer (K2) ausgebildet sind,
- einer in der ersten Kammer (K1) angeordneten und relativ zum Gehäuse (3) bewegbaren ersten Haltevorrichtung (4) für einen Rohling (2),
- einer in der zweiten Kammer (K2) angeordneten und relativ zum Gehäuse (3) bewegbaren zweiten Haltevorrichtung (5) für einen Rohling (2) und
- einer relativ zum Gehäuse (3) bewegbaren Bearbeitungsvorrichtung (6),
wobei mit der Bearbeitungsvorrichtung (6) ein in der ersten Haltevorrichtung (4) gehaltener Rohling (2) und ein in der zweiten Haltevorrichtung (5) gehaltener Rohling (2) bearbeitbar ist, **dadurch gekennzeichnet, dass** das Gehäuse (3) eine Begrenzungswand (11) mit einer ersten Zugangsöffnung (Z1) zur ersten Kammer (K1) und einer zweiten Zugangsöffnung (Z2) zur zweiten Kammer (K2) aufweist, wobei die Bearbeitungsvorrichtung (6) an der Begrenzungswand (11) bewegbar gelagert ist.

2. Bearbeitungsmaschine nach Anspruch 1, **dadurch gekennzeichnet, dass** die Bearbeitungsmaschine (1) nur eine Bearbeitungsvorrichtung (6) aufweist.

3. Bearbeitungsmaschine nach Anspruch 1 oder 2, **dadurch gekennzeichnet, dass** die Bearbeitungsvorrichtung (6) eine Antriebsvorrichtung (7), eine von der Antriebsvorrichtung (7) drehbar angetriebene Bearbeitungsspindel (8) und ein in die Bearbeitungsspindel (8) eingespanntes Bearbeitungswerkzeug (9) aufweist.

4. Bearbeitungsmaschine nach einem der Ansprüche 1 bis 3, **dadurch gekennzeichnet, dass** das Gehäuse (3) eine Trennwand (10) aufweist, wobei durch die Trennwand (10) die beiden Kammern (K1, K2) voneinander getrennt sind.

5. Bearbeitungsmaschine nach einem der Ansprüche 1 bis 4, **dadurch gekennzeichnet, dass** die erste Kammer (K1) einen Bearbeitungsbereich (B_{dry}) zur Trockenbearbeitung des in der ersten Haltevorrichtung (4) gehaltenen Rohlings (2) bildet und dass die zweite Kammer (K2) einen Bearbeitungsbereich (B_{wet}) zur Nassbearbeitung des in der zweiten Haltevorrichtung (5) gehaltenen Rohlings (2) bildet.

6. Bearbeitungsmaschine nach einem der Ansprüche 1 bis 5, **dadurch gekennzeichnet, dass** die Bearbeitungsvorrichtung (6), vorzugsweise deren Bearbeitungsspindel (8) samt Bearbeitungswerkzeug (9), zumindest teilweise durch die erste Zugangsöffnung (Z1) hindurch in die erste Kammer (K1) einfahrbar ist oder zumindest teilweise durch die zweite Zugangsöffnung (Z2) hindurch in die zweite Kammer (K2) einfahrbar ist.

7. Bearbeitungsmaschine nach einem der Ansprüche 1 bis 6, **dadurch gekennzeichnet, dass** die Bearbeitungsvorrichtung (6), vorzugsweise deren Antriebsvorrichtung (7), an der Begrenzungswand (11) linear bewegbar gelagert ist.

8. Bearbeitungsmaschine nach einem der Ansprüche 1 bis 7, **dadurch gekennzeichnet, dass** die Zugangsöffnungen (Z1, Z2) jeweils durch Verschlussmechanismen (12), vorzugsweise durch jeweils zumindest eine an einem Rahmen (13) bewegbar gelagerte Verschlusstüre (14), verschließbar sind.

9. Bearbeitungsmaschine nach einem der Ansprüche 1 bis 8, **dadurch gekennzeichnet, dass** die Begrenzungswand (11) zumindest teilweise als nachgiebiges und bewegbares Wandelement (15), vorzugsweise als Faltenbalg (15a) oder als Sackelement (15b), ausgebildet ist.

10. Bearbeitungsmaschine nach Anspruch 8 und 9, **dadurch gekennzeichnet, dass** die Verschlussmechanismen (12), vorzugsweise deren Rahmen (13), im nachgiebigen und bewegbaren Wandelement (15) befestigt sind.

11. Bearbeitungsmaschine nach einem der Ansprüche 1 bis 10, **gekennzeichnet durch** eine Steuer- oder Regeleinheit (20) zum Steuern oder Regeln der Bearbeitungsmaschine (1).

12. Bearbeitungsmaschine nach Anspruch 11, **dadurch gekennzeichnet, dass** in einem Speicher (21) der Steuer- oder Regeleinheit (20) zumindest ein, ein zahntechnisches Werkstück (W) repräsentierender Datensatz (DS) gespeichert ist, wobei in einem Bearbeitungsmodus (BM) der Steuer- oder Regeleinheit (20) die Bearbeitungsvorrichtung (6) und die erste Haltevorrichtung (4) oder zweite Haltevorrichtung (5) derart ansteuerbar sind, dass aus einem in der ersten Haltevorrichtung (4) oder zweiten Haltevorrichtung (5) gehaltenen Rohling (2) das vom zumindest einen Datensatz (DS) repräsentierte zahntechnische Werkstück (W) herausarbeitbar ist.

13. Verwendung der Bearbeitungsmaschine (1) nach einem der Ansprüche 1 bis 12 zum Herstellen von zahntechnischen Werkstücken (W) aus einem Rohling (2).

14. Verwendung nach Anspruch 13, **dadurch gekennzeichnet, dass** über die Bearbeitungsvorrichtung (6) Rohlinge (2) abwechselnd in der ersten Kammer (K1) und in der zweiten Kammer (K2) bearbeitet werden.

## Claims

1. A processing machine (1) for the production of dental workpieces (W) from a blank (2), comprising
- a housing (3) in which a first chamber (K1) and a second chamber (K2) which is separate from the first chamber (K1) are formed,
- a first holding device (4) for a blank (2) with the first holding device (4) being arranged in the first chamber (K1) and being movable relative to the housing (3),
- a second holding device (5) for a blank (2) with the second holding device (5) being arranged in the second chamber (K2) and being movable relative to the housing (3), and
- a processing device (6) being movable relative to the housing (3),
wherein a blank (2) held in the first holding device (4) and a blank (2) held in the second holding device (5) can be processed with the processing device (6), **characterized in that** the housing (3) has a limiting wall (11) with a first access opening (Z1) to the first chamber (K1) and a second access opening (Z2) to the second chamber (K2), wherein the processing device (6) is movably mounted on the limiting wall (11).

2. The processing machine according to claim 1, **characterized in that** the processing machine (1) has only one processing device (6).

3. The processing machine according to claim 1 or 2, **characterized in that** the processing device (6) comprises a drive device (7), a processing shaft (8) which is rotatably driven by the drive device (7) and a processing tool (9) which is clamped in the processing shaft (8).

4. The processing machine according to one of the claims 1 to 3, **characterized in that** the housing (3) has a partition wall (10), wherein the two chambers (K1, K2) are separated from each other by the partition wall (10).

5. The processing machine according to one of the claims 1 to 4, **characterized in that** the first chamber (K1) forms a processing area (B_{dry}) for a dry processing of the blank (2) held in the first holding device (4) and that the second chamber (K2) forms a processing area (B_{wet}) for a wet processing of the blank (2) held in the second holding device (5).

6. The processing machine according to one of the claims 1 to 5 , **characterized in that** the processing device (6), preferably its processing shaft (8) together with the processing tool (9), is at least partly movable through the first access opening (Z1) into the first chamber (K1) or is at least partly movable through the second access opening (Z2) into the second chamber (K2).

7. The processing machine according to one of the claims 1 to 6, **characterized in that** the processing device (6), preferably its drive device (7), is linearly movably mounted on the limiting wall (11).

8. The processing machine according to one of the claims 1 to 7, **characterized in that** the access openings (Z1, Z2) each can be closed by closing mechanisms (12), preferably each formed by at least one closing door (14) movably mounted on a frame (13).

9. The processing machine according to one of the claims 1 to 8, **characterized in that** the limiting wall (11) is at least partly formed as a flexible and movable wall element (15), preferably as a folding bellow (15a) or as a sack element (15b).

10. The processing machine according to claim 8 and 9, **characterized in that** the closing mechanisms (12), preferably their frames (13), are fixed to the flexible and movable wall element (15).

11. The processing machine according to one of the claims 1 to 10, **characterized by** an open loop or closed loop control unit (20) for controlling or regulating the processing machine (1).

12. The processing machine according to claim 11, **characterized in that** at least one data record (DS) representing a dental workpiece (W) is stored in a memory (21) of the open loop or closed loop control unit (20), wherein in a processing mode (BM) of the open loop or closed loop control unit (20) the processing device (6) and the first holding device (4) or the second holding device (5) can be actuated in such way that the workpiece (W) represented by the at least one data record (DS) can be processed from a blank (2) held in the first holding device (4) or in the second holding device (5).

13. Use of the processing machine (1) according to one of the claims 1 to 12 for the production of dental workpieces (W) from a blank (2).

14. The use according to claim 13, **characterized in that** blanks (2) can be processed alternately in the first chamber (K1) and in the second chamber (K2) by means of the processing device (6).

## Revendications

1. Machine d'usinage (1) destinée à la fabrication de pièces d'orthodontie (W) à partir d'une ébauche (2), dotée
- d'un boîtier (3), à l'intérieur duquel sont réalisées une première chambre (K1) et une deuxième chambre (K2) séparée de la première chambre (K1),
- d'un premier dispositif de maintien (4) pour une ébauche (2), disposé dans la première chambre (K1) et mobile par rapport au boîtier (3),
- d'un deuxième dispositif de maintien (5) pour une ébauche (2), disposé dans la deuxième chambre (K2) et mobile par rapport au boîtier (3) et
- d'un dispositif d'usinage (6) mobile par rapport au boîtier (3),
dans laquelle une ébauche (2) maintenue dans le premier dispositif de maintien (4) et une ébauche (2) maintenue dans le deuxième dispositif de maintien (5) peuvent être usinées avec le dispositif d'usinage (6), **caractérisée en ce que** le boîtier (3) comporte une paroi de délimitation (11) dotée d'une première ouverture d'accès (Z1) vers la première chambre (K1) et d'une deuxième ouverture d'accès (Z2) vers la deuxième chambre (K2), dans laquelle le dispositif d'usinage (6) est disposé de manière mobile sur la paroi de délimitation (11).

2. Machine d'usinage selon la revendication 1, **caractérisée en ce que** la machine d'usinage (1) comporte un seul dispositif d'usinage (6).

3. Machine d'usinage selon la revendication 1 ou 2, **caractérisée en ce que** le dispositif d'usinage (6) comporte un dispositif moteur (7), une broche d'usinage (8) entraînée en rotation par le dispositif moteur (7) et un outil d'usinage (9) serré dans la broche d'usinage (8).

4. Machine d'usinage selon l'une des revendications 1 à 3, **caractérisée en ce que** le boîtier (3) comporte une paroi de séparation (10), dans laquelle les deux chambres (K1, K2) sont séparées l'une de l'autre par la paroi de séparation (10).

5. Machine d'usinage selon l'une des revendications 1 à 4, **caractérisée en ce que** la première chambre (K1) forme une zone d'usinage (Bdry) destinée à l'usinage à sec de l'ébauche (2) maintenue dans le premier dispositif de maintien (4) et **en ce que** la deuxième chambre (K2) forme une zone d'usinage (Bwet) destinée à l'usinage humide de l'ébauche (2) maintenue dans le deuxième dispositif de maintien (5).

6. Machine d'usinage selon l'une des revendications 1 à 5, **caractérisée en ce que** le dispositif d'usinage (6), de préférence sa broche d'usinage (8) ainsi que son outil d'usinage (9), peut être introduit au moins partiellement dans la première chambre (K1) par la première ouverture d'accès (Z1) ou peut être introduit au moins partiellement dans la deuxième chambre (K2) par la deuxième ouverture d'accès (Z2).

7. Machine d'usinage selon l'une des revendications 1 à 6, **caractérisée en ce que** le dispositif d'usinage (6), de préférence son dispositif moteur (7), est disposé de manière linéairement mobile sur la paroi de délimitation (11).

8. Machine d'usinage selon l'une des revendications 1 à 7, **caractérisée en ce que** les ouvertures d'accès (Z1, Z2) peuvent être respectivement fermées par des mécanismes de fermeture (12), de préférence respectivement par au moins une porte de fermeture (14) disposée de manière mobile sur un cadre (13).

9. Machine d'usinage selon l'une des revendications 1 à 8, **caractérisée en ce que** la paroi de délimitation (11) est réalisée au moins partiellement comme élément de paroi (15) mobile et élastique, de préférence comme soufflet pliant (15a) ou comme élément de sac (15b).

10. Machine d'usinage selon la revendication 8 et 9, **caractérisée en ce que** les mécanismes de fermeture (12), de préférence leurs cadres (13), sont fixés dans l'élément de paroi (15) mobile et élastique.

11. Machine d'usinage selon l'une des revendications 1 à 10, **caractérisée par** une unité de commande ou de régulation (20) destinée à la commande ou à la régulation de la machine d'usinage (1).

12. Machine d'usinage selon la revendication 11, **caractérisée en ce qu'**au moins un bloc de données (DS) représentant une pièce d'orthodontie (W) est enregistré dans une mémoire (21) de l'unité de commande ou de régulation (20), dans laquelle, dans un mode d'usinage (BM) de l'unité de commande ou de régulation (20), le dispositif d'usinage (6) et le premier dispositif de maintien (4) ou le deuxième dispositif de maintien (5) peuvent être commandés de telle sorte que la pièce d'orthodontie (W) représentée par l'au moins un bloc de données (DS) peut être taillée à partir d'une ébauche (2) maintenue dans le premier dispositif de maintien (4) ou dans le deuxième dispositif de maintien (5).

13. Utilisation de la machine d'usinage (1) selon l'une des revendications 1 à 12 pour fabriquer des pièces d'orthodontie (W) à partir d'une ébauche (2).

14. Utilisation selon la revendication 13, **caractérisée en ce que** des ébauches (2) sont traitées en alternance dans la première chambre (K1) et dans la deuxième chambre (K2) par le biais du dispositif d'usinage (6).
